Europäisches Patentamt

(19) European Patent Office

Office européen des brevets

(11) **EP 0 909 009 A1**

(12) **EUROPEAN PATENT APPLICATION**

(43) Date of publication:
14.04.1999 Bulletin 1999/15

(51) Int. Cl.$^6$: **H02K 21/16**

(21) Application number: 98117233.1

(22) Date of filing: 11.09.1998

(84) Designated Contracting States:
AT BE CH CY DE DK ES FI FR GB GR IE IT LI LU
MC NL PT SE
Designated Extension States:
AL LT LV MK RO SI

(30) Priority: 16.09.1997 JP 250788/97

(71) Applicants:
• Mitsubishi Heavy Industries, Ltd.
Tokyo (JP)
• SINANO ELECTRIC CO., LTD.,
Bunkyo-ku Tokyo 112-0011 (JP)

(72) Inventors:
• Hirano, Masahiro
Mitsubishi Heavy Industries, Ltd.
Kobe, Hyogo-ken (JP)
• Kogure, Takatoshi
Mitsubishi Heavy Industr., Ltd.
Kobe, Hyogo-ken (JP)

• Kuromaru, Hiroshi
Mitsubishi Heavy Industr., Ltd.
Kobe, Hyogo-ken (JP)
• Fujiwara, Kenji
Mitsubishi Heavy Industries, Ltd.
Tokyo (JP)
• Baba, Tsutomu
c/o Sinano Electric Co., Ltd.
Chino-shi, Nagano-ken (JP)
• Henmi, Saburo
c/o Sinano Electric Co., Ltd.
Tokyo (JP)

(74) Representative:
Lins, Edgar, Dipl.-Phys. Dr.jur. et al
Gramm, Lins & Partner GbR,
Theodor-Heuss-Strasse 1
38122 Braunschweig (DE)

(54) **Brushless DC motor using permanent magnet**

(57) A brushless DC motor comprising a stator (1000) having a stator iron core (400) mounting a three-phase armature windings (U, U', V, V', W, W'), and a rotor (2000) having a permanent magnet, being disposed rotatably in the stator (1000), characterized in that the number of poles is 14, being formed of a permanent magnet, and the number of slots of the stator iron core (400) is 12, and in these slots (20-1 to 20-14), the three-phase armature windings (U, U', V, V', W, W') are mounted by concentrated winding system.

FIG.6

EP 0 909 009 A1

## Description

The present invention relates to a brushless DC motor, for use in industrial robot or machine tool, comprising a stator having a stator iron core mounting a three-phase armature winding and a rotor having a permanent magnet as magnetic pole, being disposed rotatably in the stator.

First, the terms used in this specification are defined.

"Slot" is a portion of groove of an armature iron core of a motor. The armature winding is accommodated in the slot.

"Slot number q by phase per pole" is obtained by dividing the number of slots N of armature by the number of phases m of motor and the number of poles P of motor. That is,

$$P = N/(m \cdot P) = a + (b/c)$$

where a, b, c are integers, and (b/c) is irreducible fraction.

"Integer number of windings of slot" is the number of turns of which "slot number q by phase per pole" is an integer.

"Fraction number of windings of slot" is the number of turns of which "slot number q by phase per pole" is a fraction.

"Concentrated winding system" is a system of winding the coil multiple times in one groove, that is, the system of winding the coil for the portion of one phase in the tooth part of the stator iron core. When the electric three-phase relation is established, the number of teeth of motor is a multiple of 3 in the case of a three-phase motor. The concentrated winding system is suited to automatic winding for winding the coil around the iron core by using a winding machine.

"Winding coefficient" is the value of output $P_{OUT}$ (output ratio), supposing the output value $P_{max}$ in the case of the winding disposition and constitution for obtaining the maximum output to be 1.0.

Therefore, $P_{OUT}$ is

$$P_{OUT} = \text{(proportional constant)} \cdot \omega \cdot k_W \cdot N \cdot I \cdot \Phi_g$$

where $\omega$ is the rotating speed (rad/s), $k_W$ is winding coefficient ($0 \leqq k_W \leqq 1$), N is the number of windings, I is the current (A), and $\Phi g$ is the main magnetic flux weight (Wb).

"Cogging torque" is torque fluctuation of a motor occurring at a very low rotating speed, and it is caused by change of magnetic flux due to alignment of rotor or position of rotor for teeth of stator.

"Cogging torque ripple degree" is the period of torque fluctuation (cogging torque) occurring during one revolution of the rotor.

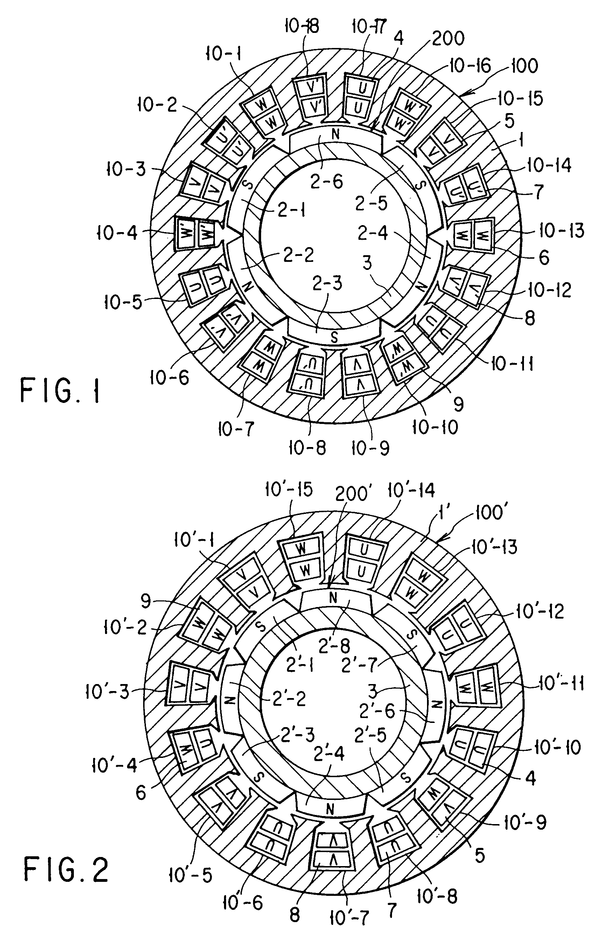

FIG. 1 is a sectional view of an example of a conventional brushless DC motor. The brushless DC motor in FIG. 1 comprises a stator 100, and a rotor 200 rotatably disposed in the stator 100. The stator 100, in FIG. 1, includes a stator iron core 1 forming 16 slots 10-1 to 10-16, and three-phase armature windings 4 to 9 (U, V, W, U', V', W') assembled in the slots 10-1 to 10-16 of the stator iron core 1. The rotor 200 includes a rotor iron core 3, and a permanent magnet 2 (2-1 to 2-6) for composing magnetic poles, disposed on the outer surface of the rotor iron core 3. The number of poles of the permanent magnet 2 forming magnetic poles in the example in FIG. 1 is six. That is, in the example in FIG. 1, the rotor iron core 3 includes the permanent magnet 2 with six poles, and the stator 100 includes the three-phase armature windings 4 to 9 (U, V, W, U', V', W') provided in the stator iron core 1 with 18 slots.

Incidentally, the three-phase armature winding U' indicates that the current flowing direction is opposite to the three-phase armature winding U, and similarly the three-phase armature windings V', W' show that the current flowing direction is opposite to the three-phase armature windings V, W, and the U phase band winding is expressed by numeral 4, the V phase band winding by numeral 5, the W phase band winding by numeral 6, the U' phase band winding by numeral 7, the V' phase band winding by numeral 8, and the W' phase band winding by numeral 9. The slot number by phase per pole q of the motor in FIG. 1 is q = 18/(3×6) = 1.0.

Such motor winding system is the lap winding of which slot number q by phase per pole is an integer of 1.0 (18 slots/3 phases/6 poles). This system is applied to the motor with other number of poles because the highest energy density is realized in the condition limiting the rotor outside diameter.

When the slot number q by phase per pole is in a range exceeding 1.0 > q > 0.5, the winding system as disclosed in Jpn. Pat. Appln. KOKAI Publication No. 7-99923 or the like is employed. A sectional view of a motor employing the winding system disclosed in Jpn. Pat. Appln. KOKAI Publication No. 7-99923 is shown in FIG. 2. The example in FIG. 2 is an example of most typical motor with eight poles. The slot number q by phase per pole of the motor in FIG. 2 is q = 15/(3×8) = 5/8.

The brushless DC motor in FIG. 2 comprises a stator 100', and a rotor 200' rotatably disposed in the stator 100'. The stator 100' includes, in FIG. 2, a stator iron core 1' forming 15 slots 10'-1 to 10'-15, and three-phase armature windings 4 to 9 (U, V, W, U', V', W') assembled in the slots 10'-1 to 10'-15 of the stator iron core 1'. The rotor 200' includes a rotor iron core 3', and a permanent magnet 2' (2'-1 to 2'-8) for composing magnetic poles, disposed on the outer surface of the rotor iron core 3'. The number of poles of the permanent magnet 2' forming magnetic poles in the example in FIG. 1 is eight.

On the other hand, in order to manufacture the brushless DC motor of small size and high output at low cost, it is required to have a large energy density $E_{dc}$ which is the motor volume ratio to the output, minimize the number of slots for disposing the armature winding for simplifying the motor structure, and employ the winding method of high working efficiency.

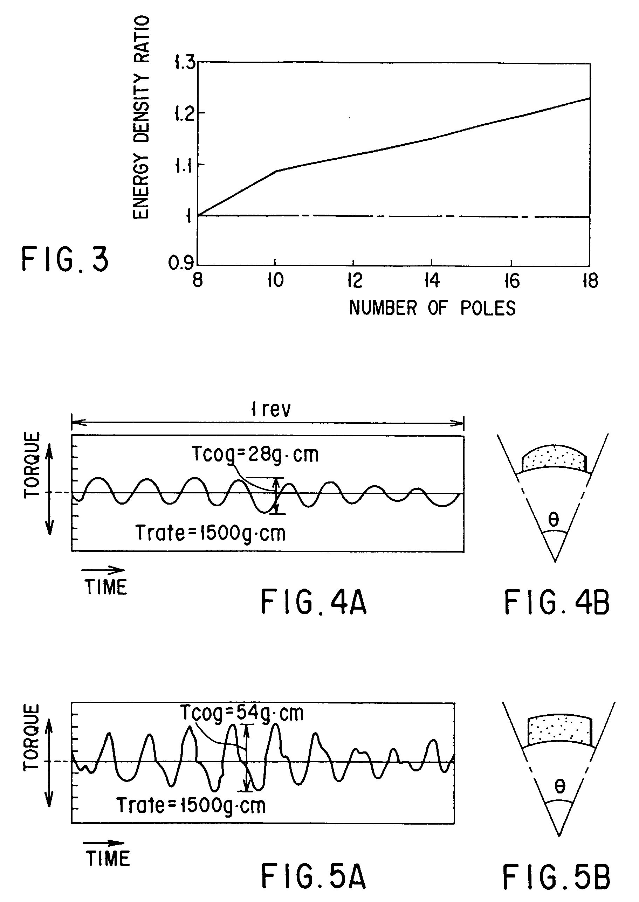

FIG. 3 shows the value of energy density $E_{dc}$ of a certain brushless DC motor, in which the rotor outside diameter and the winding system are same, the magnetic flux density of stator iron core, current density of armature winding, and other electromagnetic characteristics are nearly same, and the number of poles provided in the stator iron core is varied.

As known from FIG. 3, it is required to increase the number of poles of the motor in order to heighten the energy density $E_{dc}$.

The prior art has the following problems. First, in the relation between the energy density $E_{dc}$ and the number of poles in FIG. 3, multiple poles are needed for obtaining motor of small size and high output.

However, when the number of poles is increased while keeping constant the rated rotating speed N (rpm), the electric frequency is proportional to the number of poles P. Accordingly, the voltage drop portion by the armature inductance $L_a$ (H) occupied in the voltage (the value proportional to the supply voltage) $V_{in}$ (V) that can be supplied by the driving amplifier to the motor, that is,

$$2\pi N/60 \cdot P/2 \cdot L_a \cdot I \qquad\qquad (V)$$

increases. It is hence required to employ the motor design capable of maintaining the output torque $\pi$ (Nm) by raising the current I (A) by the portion of lowering the main magnetic flux $\Phi_g$ (Wb) from a certain number of poles or more. As a result, the current capacity of the driving amplifier is raised, and the system cost is relatively high.

Secondly, the voltage $V_{in}$ that can be supplied by the driving amplifier to the motor is

$$V_{in} \cong [(Ra \cdot I + K1 \cdot \Phi g \cdot N)^2 + (2\pi N/60 \cdot P/2 \cdot La \cdot I)^2]^{1/2} \qquad\qquad (1)$$

and the output torque $\tau$ is

$$\tau = K_2 \cdot \Phi_g \cdot I \qquad\qquad (2)$$

where $R_a$ is the armature winding resistance ($\Omega$), $K_1$ is the coefficient relating to the inducing voltage (W/Wb/rpm), and $K_2$ is the coefficient relating to the torque (Nm/Wb/A).

In this case, when the number of slots is a fraction slot winding of slot number by phase per pole of q > 1.0, or a lap winding of 1.0 > q > 0.5, a favorable induced voltage waveform is obtained, and the torque ripple and other motor characteristics are favorable, but the productivity of motors is lowered due to effects of multiple slots by multiple poles or complication of armature winding, and the motor cost is increased.

Or, by employing the slot number by phase by pole of q = 1.0, in order to obtain a favorable induced voltage waveform, additional measures are necessary, such as skew on the stator or permanent magnet, or thinning of the edge of permanent magnet, which further adds to the cost.

Further, in the case of the slot number by phase per pole of q = 0.5, although it is an effective method, the winding coefficient in the proportional relation with the energy density is 0.866, and as compared with the winding coefficient 0.954 of the conventional motor in FIG. 2, it is about 10% smaller, and hence it is a demerit because it is slightly larger than the motor of the same number of poles.

Generally, moreover, by employing the slot number by phase per pole of q < 0.5, the productivity is enhanced owing to the effects of saving of slots, but as the saving of slots is advanced, changes of attraction force between the teeth at the stator side and the permanent magnet at the rotor side increase, and the cogging torque becomes larger. Accordingly, as shown in the cogging torque countermeasures shown in FIGS. 4A and 4B, it is required to reduce the thickness of the edge of the permanent magnet piece, or provide the stator or permanent magnet with a skew. Hence, the cost is raised.

FIG. 4A shows a torque characteristic of a conventional eight-pole nine-slot motor with cogging torque countermeasure, and FIG. 4B shows a sectional shape of a piece of permanent magnet of the same motor. By reducing the thickness of the edge of the permanent magnet piece, the cogging torque $T_{cog}$ becomes 28 g·cm. The eight-pole nine-slot motor in FIGS. 4A and 4B employs an eccentric magnet of eight-pole nine-slot q = 3/8, and the rated torque $T_{rate}$ is

1.5 kg·cm. Besides, $T_{cog}/T_{rate} \times 100 = 1.9\%$. Herein, θ is the angle per pole of the permanent magnet piece used as the magnetic pole.

As compared with the cogging torque countermeasure examples shown in FIGS. 4A and 4B, FIG. 5A shows the torque characteristic of the conventional eight-pole nine-slot motor without cogging torque countermeasure, and FIG. 5B shows a sectional shape of a piece of permanent magnet of the motor. The edge of the permanent magnet piece is not so thin as in FIG. 4B. The cogging torque $T_{cog}$ is 54 g·cm. In the eight-pole nine-slot motor in FIGS. 5A and 5B, using the concentric magnet of eight-pole nine-slot q = 3/8, the rated torque $T_{rate}$ is 1.5 kg·cm. Besides, $T_{cog}/T_{rate} \times 100 = 3.6\%$. Herein, θ is the angle per pole of the permanent magnet piece used as the magnetic pole.

It is hence an object of the invention to provide a brushless DC motor capable of exhibiting a favorable motor characteristic without raising the cost.

To solve the problems, the brushless DC motor of the invention is constituted as follows. That is, it is a brushless DC motor comprising a stator having a stator iron core forming slots for mounting a three-phase armature winding, and a rotor having magnetic poles and rotor iron core, being disposed rotatably in the stator,

in which the number of poles of the rotor is 14, being formed of a permanent magnet, and
the number of slots of the stator iron core is 12.

In the 12 slots of the stator iron core, the three-phase armature winding is mounted by concentrated winding system.

Moreover, the permanent magnet for composing the magnetic poles of the rotor consists of 14 permanent magnet pieces of same thickness, being mounted alternately and annularly in S pole and N pole, in the rotor iron core.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a front sectional view of a conventional 6-pole 18-slot motor.
FIG. 2 is a front sectional view of a conventional 8-pole 15-slot motor.
FIG. 3 is a diagram showing the relation between the number of poles and the energy density.
FIGS. 4A and 4B are diagrams showing an example of 8-pole 9-slot motor with cogging torque countermeasure.
FIGS. 5A and 5B are diagrams showing an example of 8-pole 9-slot motor without cogging torque countermeasure.
FIG. 6 is a front sectional view of a motor in a first embodiment of the invention.
FIGS. 7A and 7B are diagrams showing the relation of the number of poles and current of a motor upon occurrence of same torque.
FIGS. 8A and 8B are diagrams showing cogging torque characteristic and sectional shape of permanent magnet piece in the motor in the first embodiment of the invention.

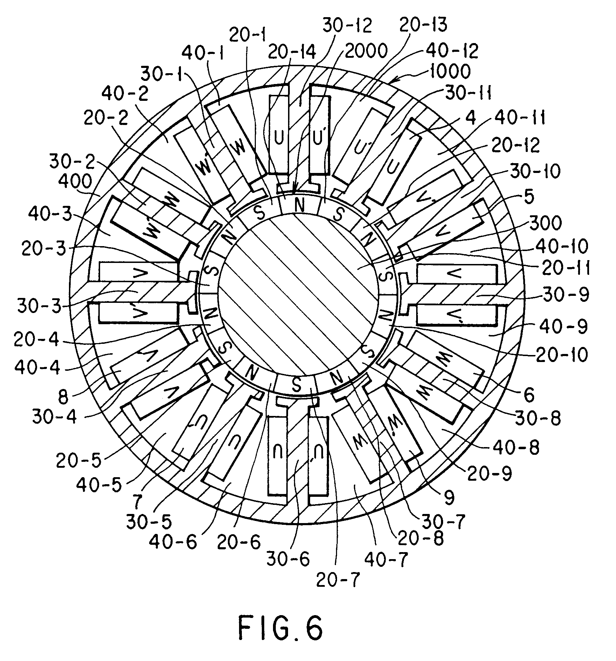

As shown in FIG. 6, a brushless DC motor in an embodiment of the invention comprises a stator 1000 having a stator iron core 400 with 12 slots, and a rotor 2000 having a rotor iron core 300 and permanent magnets 20-1 to 20-14 with 14 poles as magnetic poles. The stator iron core 400 includes 12 teeth 30-1 to 30-12, and 12 slots 40-1 to 40-12. In the slots 40-1 to 40-12 of the stator iron core 400, three-phase armature windings U, V, W, U', V', W' are mounted by shifting a phase of 120 degrees at an electric angle.

Incidentally, the three-phase armature winding U' shows that the winding direction is reverse to the three-phase armature winding U, that is, the current flowing direction is reverse, and similarly the three-phase armature windings V', W' show that the winding direction is reverse to the three-phase armature winding V, W, that is, the current flowing direction is reverse, and the U phase band winding is expressed by 4, the V phase band winding is expressed by 5, the W phase band winding is expressed by 6, the U' phase band winding is expressed by 7, the V' phase band winding is expressed by 8, and the W' phase band winding is expressed by 9.

In the brushless DC motor of the embodiment, in the condition of number of slots of armature N = 12, number of phases of motor m = 3, and number of poles of motor P = 14, the "slot number q by phase per pole" is

$$q = N/(m \cdot P) = 12/(3 \times 14) = 2/7$$

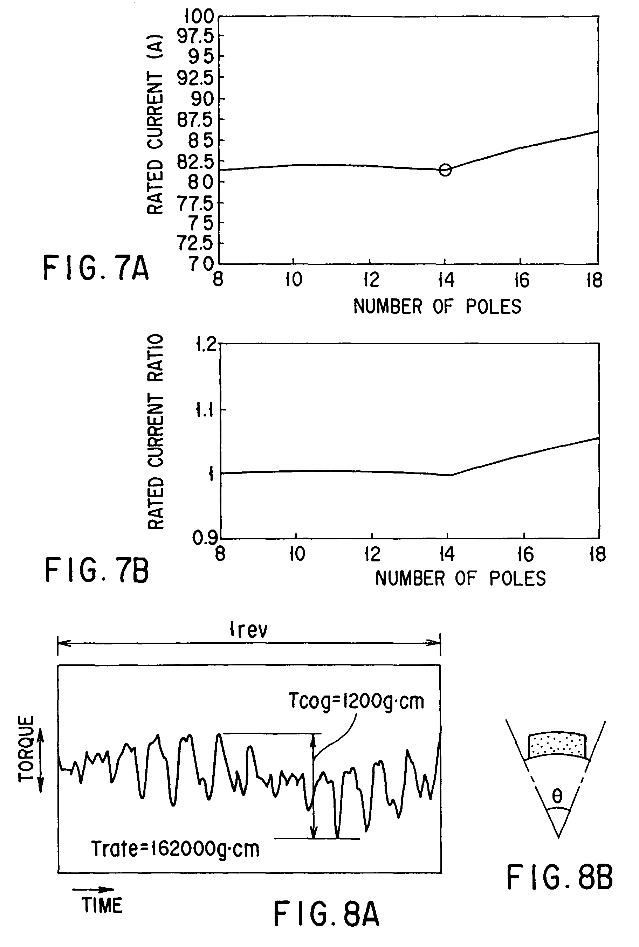

In FIG. 7A, using the number of poles of motor as parameter, by designing the motor with rated output of 37 kW, 1000 rpm, the relation between the rated current and the number of poles of motor is expressed. Of course, the result of FIG. 7A can be applied to other outputs regardless of the rated output.

FIG. 7B shows the relation between the number of poles of motor and standard value of current, at the reference value (1.0) of the current (81.4A) when the number of poles of motor is 8 in FIG. 7A.

FIG. 8A shows the result of measurement of output torque by low speed operation of the motor of rated output of 5.0 kW, 3000 rpm, by an external driving device. FIG. 8B shows the sectional shape of the permanent magnet pieces in this case.

(The reason why the number of poles of motor is 14)

The motor efficiency hardly changes regardless of the number of poles of the motor. The advantage of multiple poles is reduction of cost by decrease in the number of permanent magnets being used. Further, the demerit of multiple poles is complicated winding and lowering of driver control performance.

To suppress feed current in motor drive, the number of magnetic poles is preferred to be 14 or less. That is, from the result in FIG. 7B showing the relation between the number of poles of motor and current upon occurrence of same torque, in consideration of the relation between multiple poles for raising the energy density $E_{dc}$ of motor and increase of current capacity of driving amplifier, the number of poles of motor of 14 is employed because the current increase is small.

(The reason why the number of slots is 12)

The winding coefficient which is in the proportional relation with the energy density $E_{dc}$ is obtained in every slot. In the range of the slot number by phase by pole of $q < 0.5$, as shown in Table 1, the winding coefficient is highest in 12 slots, so that a motor of small size and high productivity may be realized.

Table 1

| Winding coefficient | No. of slots | No. of poles | Winding system |
|---|---|---|---|
| 0.933 | 12 | 14 | Concentrated winding |
| 0.717 | 9 | 14 | Concentrated winding |
| 0.75 | 6 | 14 | Concentrated winding |

The number of slots in this table is, in the case of concentrated winding system, a multiple of 3 because of three-phase motor.

(Operation of the Invention)

The following effects are brought about by setting the number of poles of the permanent magnets 20-1 to 20-14 installed in the rotor iron core 300 at 14, and the number of slots at 12 so that the three-phase armature windings U, V, W, U', V', W' may be installed in the stator iron core 400 by concentrated winding system as described above.

(1) By the multiple-pole design with 14 magnetic poles, the energy density $E_{dc}$ is enhanced, and the motor volume is reduced by 10 to 15% as compared with the prior art.
(2) The quantity of permanent magnets used for composing the magnetic poles can be saved by 30 to 40% at the same resistance to demagnetization as compared with the prior art, and the cost can be lowered.
(3) By the multiple-pole design, the current capacity of the driving amplifier is same as in the prior art, and the power semiconductor element used in the driving amplifier is same as in the prior art.
(4) The number of slots is 12, and the slot number by phase per pole of q is 2/7 ($q < 0.5$ or less), but without cogging torque measures such as thinning of edge of permanent magnets or provision of stator or permanent magnets with skew, as shown in FIGS. 8A and 8B, the cogging torque of the motor of the invention is equivalent to the performance of the conventional motors as shown in FIGS. 4A, 4B, 5A and 5B.
(5) The winding coefficient 0.933 of the motor of the invention is equivalent to that of the conventional motor, and therefore, at the high energy density and saved slots, the winding job can be done by an automatic machine, that is, the concentrated winding system is realized.
(6) Because of the slot number by phase per pole of q = 2/7, the motor of the invention has the same distribution winding effect as the multiple-slot motor of q = 2, and hence the induced voltage waveform can be formed in a sinusoidal wave same as in the conventional motor. Accordingly, the required stability of output torque of the servo motor is realized.
(7) The cogging torque ripple degree determined by the least common multiple of 12 slots and 14 poles is as large as 84, so that the motor rotation ripple may be easily set outside of the effective range of the response frequency of mechanical system.

(8) Since the number of slots is an even number, the imbalance force of the magnetic circuit in the motor caused by rotor eccentricity, assembling precision, bearing looseness, or fluctuation of processing precision, magnetization state or disposition precision of permanent magnets is less likely to occur structurally as compared with the case of an odd number of slots.

The invention is thus constituted, and the following effects are produced. First, the brushless DC motor of small size, high output and low cost can be manufactured.

In the invention, as a result of FIGS. 7A and 7B in consideration of the relation of multiple-pole design for enhancing the energy density $E_{dc}$ of the motor and increase in the current capacity of driving amplifier, by employing the number of poles of 14 noted for small current increase, the motor of the highest energy density is realized without changing the driving amplifier capacity.

Moreover, by the number of slots of 12 (slot number by phase per pole q = 2/7, q < 0.5), without cogging torque measures known as general demerit (particularly thinning the edge of permanent magnets, or providing the stator or permanent magnets with skew), the motor characteristics are excellent, and by employing the concentrated winding system of small size and most excellent in winding job efficiency and mass productivity, reduction of cost is realized.

## Claims

1. A brushless DC motor comprising a stator (1000) having a stator iron core (400) forming slots (40-1 to 40-12) for mounting three-phase armature windings (U, U', V, V', W, W') and a rotor (2000) having magnetic poles (20-1 to 20-14) and rotor iron core (300), being disposed rotatably in the stator (1000),
characterized in that the number of poles (20-1 to 20-14) is 14, being formed of a permanent magnet, and the number of slots (40-1 to 40-12) of said stator iron core is 12.

2. A brushless DC motor according to claim 1, characterized in that said three-phase armature windings (U, U', V, V', W, W') are mounted by concentrated winding system in the 12 slots of said stator iron core (400).

3. A brushless DC motor according to claim 1, characterized in that the permanent magnet for composing the magnetic poles (20-1 to 20-14) of said rotor (1000) consists of 14 permanent magnet pieces of same thickness, being mounted alternately and annularly in S pole and N pole, in the rotor iron core (300).

FIG. 1

FIG. 2

FIG. 3

ENERGY DENSITY RATIO

1.3
1.2
1.1
1
0.9

8  10  12  14  16  18
NUMBER OF POLES

TORQUE

1 rev

Tcog=28g·cm

Trate=1500g·cm

TIME

FIG. 4A

θ

FIG. 4B

TORQUE

Tcog=54g·cm

Trate=1500g·cm

TIME

FIG. 5A

θ

FIG. 5B

8

FIG.6

FIG. 7A

RATED CURRENT (A)

NUMBER OF POLES

FIG. 7B

RATED CURRENT RATIO

NUMBER OF POLES

1rev

TORQUE

Tcog=1200g·cm

Trate=162000g·cm

TIME

FIG. 8A

θ

FIG. 8B

10

European Patent Office

**EUROPEAN SEARCH REPORT**

Application Number

EP 98 11 7233

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 164 622 A (KORDIK JEFFREY A) 17 November 1992 * column 5, line 5 - column 6, line 44; figure 2 * | 1-3 | H02K21/16 |
| A,P | US 5 723 931 A (ANDREY BORIS DANIEL) 3 March 1998 * column 4, line 1 - line 24; figures 1,5 * | 1-3 | |
| A | EP 0 449 538 A (LUCAS IND PLC) 2 October 1991 * abstract; figures 2,4 * | 1-3 | |
|  |  |  | **TECHNICAL FIELDS SEARCHED (Int.Cl.6)** H02K |

The present search report has been drawn up for all claims

| Place of search | Date of completion of the search | Examiner |
|---|---|---|
| MUNICH | 16 November 1998 | Tangocci, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**                    EP 98 11 7233

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-1998

| Patent document cited in search report | Publication date | Patent family member(s) | Publication date |
|---|---|---|---|
| US 5164622 A | 17-11-1992 | NONE | |
| US 5723931 A | 03-03-1998 | WO 9726699 A | 24-07-1997 |
| EP 0449538 A | 02-10-1991 | NONE | |

EPO FORM P0459

For more details about this annex : see Official Journal of the European Patent Office, No. 12/82